# EUROPEAN PATENT SPECIFICATION

(11) **EP 1 276 381 B1**
(45) Date of publication and mention of the grant of the patent: **03.12.2003**
(21) Application number: 01923822.9
(22) Date of filing: 24.04.2001
(51) Int. Cl.: A22B 5/00, A01K 11/00

(54) **IMPROVING THE TRACEABILITY OF MEAT**
VERBESSERTE VERFOLGUNG VON FLEISCH
AMELIORATION DE LA TRACABILITE DE LA VIANDE

(30) Priority: 26.04.2000 GB 0010106
(43) Date of publication of application: 22.01.2003
(73) Proprietor: Khodabandehloo, Koorosh, Cullompton, Devon EX15 3LA (GB); Horst, Eger, Culmstock, Devon EX15 3LA (GB); Framstad, Knut, Culmstock, Devon EX15 3LA (GB)
(72) Inventor: Khodabandehloo, Koorosh, Cullompton, Devon EX15 3LA (GB); Horst, Eger, Culmstock, Devon EX15 3LA (GB); Framstad, Knut, Culmstock, Devon EX15 3LA (GB)
(74) Representative: Craske, Stephen Allan
(86) International application number: GB0101824
(87) International publication number: WO01080654

(56) References cited:
- EP-A- 0 273 371
- EP-A- 0 398 338
- DE-A- 3 018 397
- US-A- 4 557 191
- US-A- 5 411 435
- US-A- 5 478 990

## Description

### TECHNICAL FIELD OF THE INVENTION

This invention is concerned with improving the traceability of meat.

### BACKGROUND

Traceability is currently one of the most topical issues in the meat industry driven in part by a desire to meet high expectations of retailers and consumers. Full forward and backward traceability from farm to consumer is desirable in order to minimise and control the health risks associated with BSE, e. coli, salmonella etc. Quality related payment has necessitated the implementation of traceability procedures from farm to the point of carcass grading and classification, but to date, traceability beyond this point has been very limited. Although full traceability of some beef products back to the original carcass has been achieved this involves the use of laborious manual documentation procedures.

Document US-A-5411435 discloses a method and apparatus for tracing meat according to the preambles of independent claims 1 and 6.

The present invention seeks to provide a new and inventive method and apparatus for improving the traceability of meat.

### SUMMARY OF THE INVENTION

The present invention proposes a method of improving the traceability of meat according to claim 1, in which a unique carcass-identification mark is applied to selected areas of a meat carcass before the carcass is separated into primal cuts.

By choosing the appropriate areas depending on the kind of carcass and the nature of the end products it is possible to ensure that every piece of meat carries the mark, thereby unambiguously linking it to the original carcass.

The carcass-identification mark may be visible or invisible and preferably includes a unique serial number. The mark may be applied in a human-readable form but is preferably applied in an encoded, machine-readable form. By this means the mark can automatically be read prior to packaging of the meat products and the mark applied to the packing in a human-readable form.

The carcass-identification mark may be applied to the carcass using a laser or other means, but the mark may cheaply and reliably be applied by means of an indelible ink which is specified for food applications. The mark is applied using a printing head which is carried and moved by a mechanical robotic arm under the control of a computer.

The invention also provides a carcass marking apparatus according to claim 6 which includes:
- a carrier system for moving prepared meat carcasses from a loading position to an unloading position;
- sensing means for detecting the position of the meat carcasses during movement along the carrier system; and
- a marking head which is carried and moved by a mechanical robotic arm under the control of a computer in response to information provided by the sensing means in order to apply a unique carcass-identification mark to the carcass.

The marking head is provided with a proximity sensor allowing the positioning of the head close to the carcass. This allows for shape variation between the carcasses, keeping the printing head in the optimum position relative to the carcass for best print quality.

The use of a computer-controlled robotic arm allows the marking head to move quickly and accurately to the required positions relative to the carcass.

The arm will be arranged to move the head in three mutually orthogonal axes.

The marking head could, for example, include a laser, but a low cost system may simply apply the mark to the carcass by means of indelible ink. The marks may be applied using invisible ink (except for a health mark which must, by law, be visible) and may be applied to the skin side and/or the bone side of the carcass.

The carrier system includes a series of suspension elements for suspending the carcasses therefrom.

### BRIEF DESCRIPTION OF THE DRAWINGS

The following description and the accompanying drawings referred to therein are included by way of non-limiting example in order to illustrate how the invention may be put into practice. In the drawings:

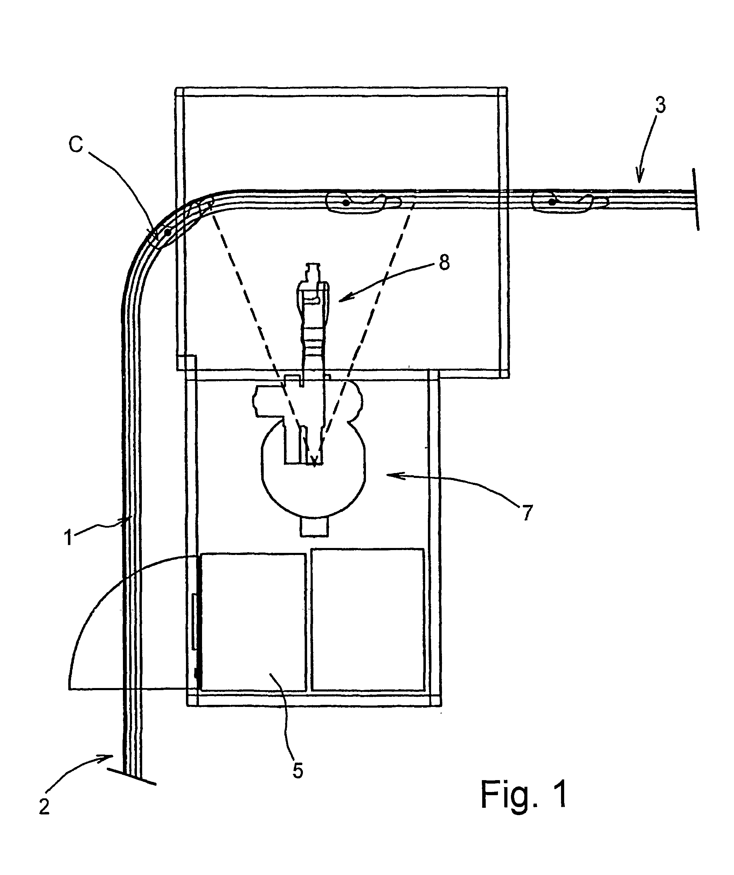

Figure 1 is a plan view of apparatus for printing meat carcasses in accordance with the invention;
Figure 2 is a side elevation of the apparatus looking from the right in Fig. 1;

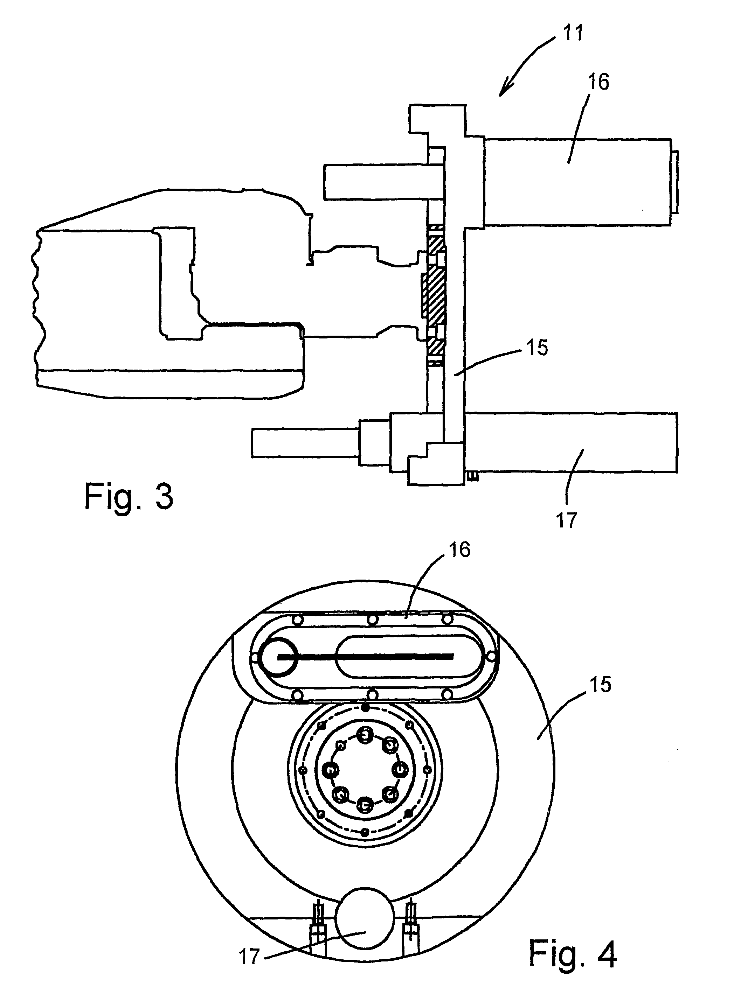

Figure 3 is a plan view of the printing head of the apparatus;
Figure 4 is an end elevation of the printing head looking from the right in Fig. 3;
Figure 5 is a meat carcass which is printed using the apparatus, looking from the skin side;
Figure 6 shows the same carcass looking from the bone side; and
Figures 7 and 8 are examples of composite marks which can be printed on the carcass using the apparatus.

### DETAILED DESCRIPTION OF THE DRAWINGS

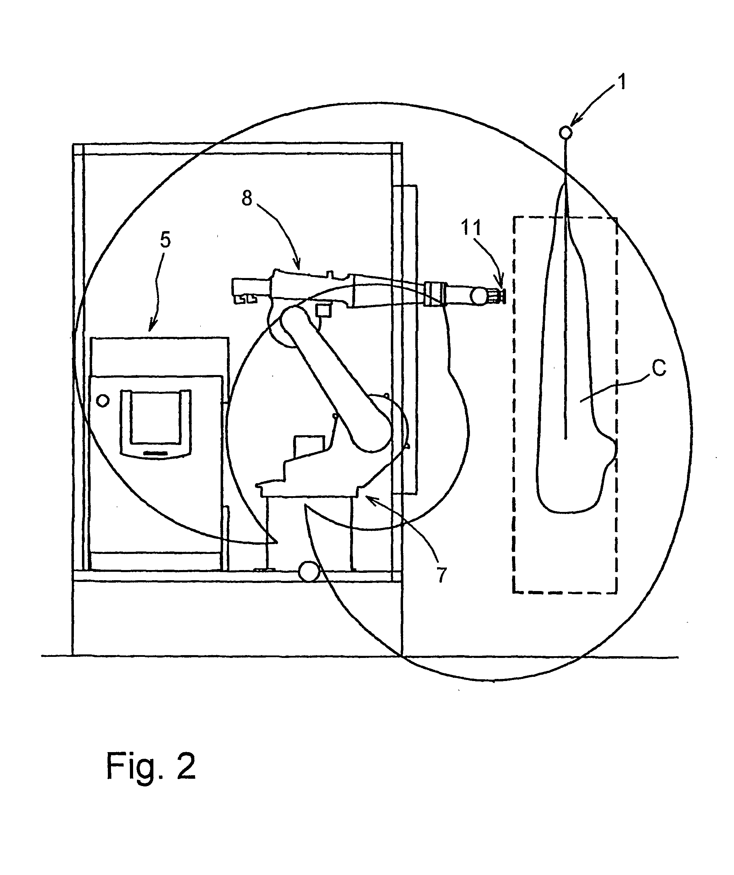

Referring to Fig.s 1 and 2, the carcass printing apparatus may be installed at the end of a slaughter line and includes a track 1 for conveying the meat carcasses C (e.g. a side of pork) from a loading end 2 to an unloading end 3. If desired, the preliminary cutting of the carcass may be carried out whilst the carcass is still moving on the track 1, either manually or mechanically, before the carcass is unloaded. The track include chains or similar means suitable for carrying the meat carcasses one after another suspended from hooks in a head-end-down orientation, as seen in Fig. 2.

The apparatus includes a cabinet 5, which contains a computer for data processing and control, and a motorised robot 7 having a robotic arm 8 which comprises two or more relatively moveable sections. The arm carries a printing head 11 and is arranged to move the head in three mutually orthogonal axes (i.e. cartesian X, Y and Z axes) adjacent to the track 1 with provision for rotation of the printing head. The robot 7 is a standard industrial unit which may be completely encased within a liquid-impermeable jacket except for the head 11.

The robot moves the printing head relative to the carcasses in a pattern determined by the computer (see below). An optical system such as a CCD camera may be arranged to obtain a digital image of each carcass as it moves along the track 1, and the computer may analyse the digital image to determine the presence, size and orientation of each carcass. The marking head is provided with a proximity sensor (not shown) for positioning the head at the optimum distance from the carcass for best print quality. This allows for shape variation between carcasses of similar size.

Means (not shown) may be provided for changing the orientation of the carcasses on the track 1 so that they present their skin side or bone side to the robot 7.

Referring to Fig.s 3 and 4, the printing head includes a circular mounting plate 15 which, in this example, carries two diametrically-spaced printing units 16 and 17 which use food-approved indelible printing ink. The plate can be rotated about its axis to change the orientation of the printing head when required. The first printing unit 16 is a "drop on demand" printer which can achieve reasonable print quality over a large area (e.g. 200 mm). The second unit 17 is an inkjet printer which allows finer detail to be achieved but in a smaller area.

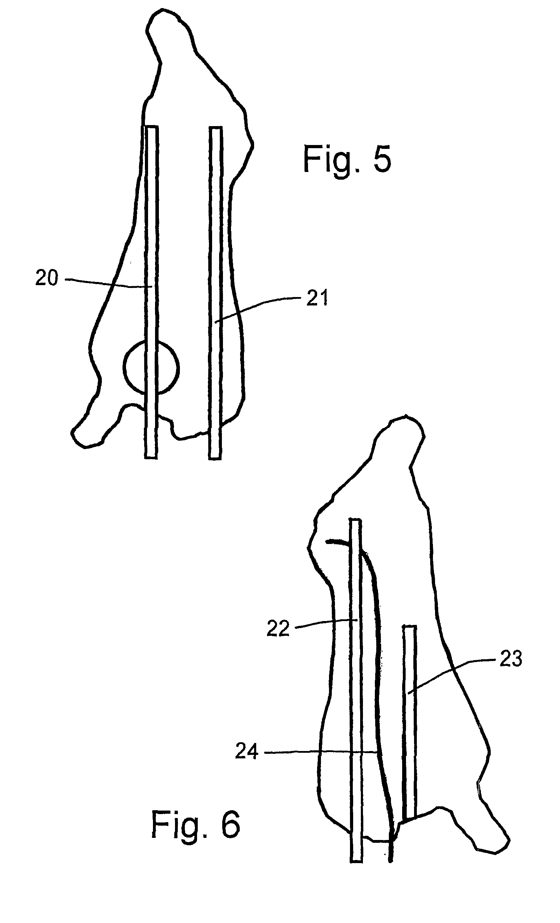

Fig.s 5 and 6 show, by way of example, how a carcass may be printed to ensure that all of the primal cuts will bear an identification mark. On the skin side (Fig. 5) the marks are printed in two repeating vertical bands 20 and 21, as shown. On the bone side (Fig. 6) the marks are printed in two vertical bands 22 and 23 on opposite sides of the spinal column, the position of which is indicated at 24.

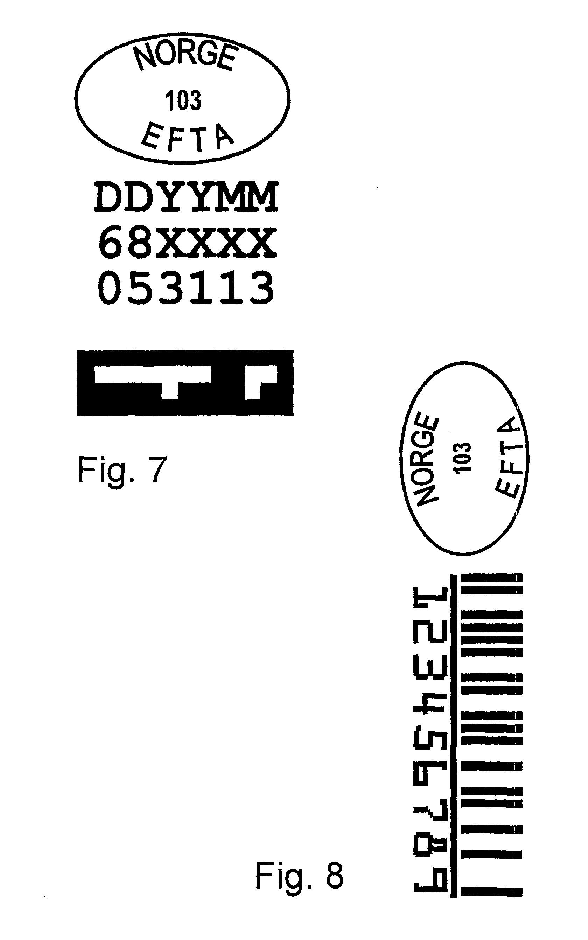

Fig. 7 shows a single identification mark which is repeated a number of times in each band. The top component is a standard European health mark indicating the country of origin (in this case Norway). This is followed by a date field (DDMMYY), a code identifying the meat processing plant (68XXXX) and then a unique serial number identifying the carcass (053113). Below this, and most importantly, the carcass serial number is repeated in a machine-readable encoded form. Any part of the mark may be applied in invisible ink apart from the health mark.

Fig. 8 shows another form of the identification mark. Beneath the European health mark there is a unique serial number identifying the carcass (represented for illustrative purposes by the number "123456789") which is printed in a human and machine readable OCR font as a first means of electronic data capture. Alongside this the carcass serial number is repeated in the form of a series of lines in a binary format, similar to a bar code, which can be read into a computer using an optical scanning head. Again, the carcass number marking may be applied in invisible ink.

A record of the identification numbers applied to the carcasses is stored by the computer at processing plant together with other relevant information identifying the source of the carcass. After the carcass has been cut up and prior to packaging for sale to the consumer, the encoded identification number is read by machine and the identification code is then printed onto the product labelling in manually-readable form (i.e. 053113).

It will thus be appreciated that the system allows meat to be traced back from point-of-sale to the originating farm via the records made by the processing plant, and vice versa.

## Claims

1. A method of improving the traceability of meat in which, under control of a computer (5), meat carcasses (C) move along a track (1) suspended on a series of suspension elements and a unique carcass-identification mark is applied a plurality of times to selected areas of a meat carcass before the carcass is separated into primal cuts, and sensing means are provided for sensing the size of the meat carcasses as they travel along the track,
***characterised in that***
the carcass-identification marks are applied to each carcass by a single printing head (11) which is carried and moved by a mechanical robotic arm (8) which moves the printing head in three mutually orthogonal axes, and the printing head is provided with a proximity sensor for accurately positioning the head close to the carcass at each printing position which is determined according to the size of the carcass.

2. A method according to Claim 1, in which each carcass-identification mark includes a unique serial number.

3. A method according to Claim 2, in which the serial number is applied in a human-readable form which can also be read by machine.

4. A method according to Claim 1, in which each carcass-identification mark is applied in an encoded, machine-readable form.

5. A method according to Claim 1, in which the carcass-identification mark is applied to the carcass by means of an indelible ink.

6. Carcass marking apparatus in which, under control of a computer (5), meat carcasses (C) move along a track (1) suspended on a series of suspension elements and a unique carcass-identification mark is applied a plurality of times to selected areas of a meat carcass before the carcass is separated into primal cuts, and sensing means are provided for sensing the size of the meat carcasses as they travel along the track,
***characterised in that***
the carcass-identification marks are applied to each carcass by a single printing head (11 ) which is carried and moved by a mechanical robotic arm (8) which moves the printing head in three mutually orthogonal axes, and the printing head is provided with a proximity sensor for accurately positioning the head close to the carcass at each printing position which is determined according to the size of the carcass.

7. Apparatus according to Claim 6, in which each carcass-identification mark includes a unique serial number.

8. Apparatus according to Claim 7, in which the serial number is applied in a human-readable form which can also be read by machine.

9. Apparatus according to Claim 6, in which each carcass-identification mark is applied in an encoded, machine-readable form.

10. Apparatus according to Claim 6, in which the carcass-identification mark is applied to the carcass by means of an indelible ink.

## Patentansprüche

1. Verfahren zur Verbesserung der Verfolgbarkeit von Fleisch, bei dem, unter Steuerung eines Computers (5), Schlachttierkörper (C) sich entlang einer Bahn (1) aufgehängt an einer Reihe von Aufhängeelementen bewegen und ein eindeutiges Schlachttierkörper-Identifizierungszeichen mehrere Male auf ausgewählte Gebiete eines Schlachttierkörpers aufgebracht wird, bevor der Schlachttierkörper in Primärstücke zerteilt wird, und bei dem Sensormittel vorgesehen sind, um die Größe der Schlachttierkörper zu erfassen, während sie sich entlang der Bahn bewegen,
**dadurch gekennzeichnet, dass**
die Schlachttierkörper-Identifizierungszeichen auf jeden Schlachttierkörper durch einen einzelnen Druckkopf (11) aufgebracht werden, der von einem Roboterarm (8) getragen und bewegt wird, welcher den Druckkopf in drei zueinander orthogonalen Achsen bewegt, und dass der Druckkopf mit einem Näherungssensor versehen ist, um den Kopf präzise nahe an dem Schlachttierkörper an jeder Druckposition zu positionieren; die gemäß der Größe des Schlachttierkörpers bestimmt wird.

2. Verfahren nach Anspruch 1, bei dem jedes Schlachttierkörper-Identifizierungszeichen eine eindeutige Seriennummer umfasst.

3. Verfahren nach Anspruch 2, bei dem die Seriennummer in einer für Menschen lesbaren Form aufgebracht wird, die auch maschinenlesbar ist.

4. Verfahren nach Anspruch 1, bei dem jedes Schlachttierkörper-Identifizierungszeichen in einer kodierten, maschinenlesbaren Form aufgebracht wird.

5. Verfahren nach Anspruch 1, bei dem das Schlachttierkörper-Identifizierungszeichen mit unauslöschlicher Tinte auf den Schlachttierkörper aufgebracht wird.

6. Schlachttierkörper-Markierungsvorrichtung, bei der, unter Steuerung eines Computers (5), Schlachttierkörper (C) sich entlang einer Bahn (1) aufgehängt an einer Reihe von Aufhängeelementen bewegen und ein eindeutiges Schlachttierkörper-Identifizierungszeichen mehrfach auf ausgewählte Gebiete des Schlachttierkörpers aufgebracht wird, bevor der Schlachttierkörper in Primärstücke zerlegt wird, und bei dem Sensormittel vorgesehen sind, um die Größe der Schlachttierkörper zu erfassen, während sie sich entlang der Bahn bewegen,
**dadurch gekennzeichnet, dass**
die Schlachttierkörper-Identifizierungszeichen auf jeden Schlachttierkörper durch einen einzigen Druckkopf (11) aufgebracht werden, der von einem mechanischen Roboterarm (8) getragen und bewegt wird, welcher den Druckkopf in drei zueinander orthogonalen Achsen bewegt, und dass der Druckkopf mit einem Näherungssensor versehen ist, um den Druckkopf präzise nahe an dem Schlachttierkörper an jeder Druckposition zu positionieren, die gemäß der Größe des Schlachttierkörpers bestimmt wird.

7. Apparat nach Anspruch 6, bei dem jedes Schlachttierkörper-Identifizierungszeichen eine eindeutige Seriennummer umfasst.

8. Apparat nach Anspruch 7, bei dem die Seriennummer in für Menschen lesbarer Form aufgebracht wird, die auch maschinenlesbar ist.

9. Apparat nach Anspruch 6, bei dem jedes Schlachttierkörper-Identifizierungszeichen in kodierter, maschinenlesbarer Form aufgebracht wird.

10. Apparat nach Anspruch 6, bei dem das Schlachttierkörper-Identifizierungszeichen auf dem Schlachttierkörper mittels unauslöschlicher Tinte aufgebracht wird.

## Revendications

1. Procédé pour améliorer la traçabilité de la viande, dans lequel, sous le contrôle d'un ordinateur (5), des carcasses de viande (C) se déplacent le long d'une voie (1) suspendues sur une série d'éléments de suspension et une marque unique d'identification de carcasse est appliquée une pluralité de fois dans des zones choisies d'une carcasse de viande avant que la carcasse ne soit séparée en découpes principales, et des moyens de détection sont prévus pour détecter la taille des carcasses de viande au fur et à mesure qu'elles se déplacent le long de la voie,
**caractérisé en ce que**
les marques d'identification de carcasses sont appliquées à chaque carcasse par une seule tête d'impression (11) qui est supportée et déplacée par un bras de robot mécanique (8) qui déplace la tête d'impression dans trois axes mutuellement orthogonaux, et la tête d'impression est pourvue d'un capteur de proximité pour positionner avec précision la tête près de la carcasse dans chaque position d'impression qui est déterminée en fonction de la taille de la carcasse.

2. Procédé selon la revendication 1, dans lequel chaque marque d'identification de carcasse comprend un numéro de série unique.

3. Procédé selon la revendication 2, dans lequel le numéro de série est appliqué sous une forme lisible à l'oeil humain, qui peut également être lue en machine.

4. Procédé selon la revendication 1, dans lequel chaque marque d'identification de carcasse se présente sous une forme codée lisible en machine.

5. Procédé selon la revendication 1, dans lequel la marque d'identification de carcasse est appliquée à la carcasse au moyen d'une encre indélébile.

6. Appareil de marquage de carcasse, dans lequel, sous le contrôle d'un ordinateur (5), les carcasses de viande (C) se déplacent le long d'une voie (1) suspendues sur une série d'éléments de suspension et une marque unique d'identification de carcasse est appliquée une pluralité de fois sur des zones choisies d'une carcasse de viande avant que la carcasse ne soit séparée en découpes principales, et des moyens de détection sont prévus pour détecter la taille des carcasses de viande au fur et à mesure qu'elles se déplacent le long de la voie,
**caractérisé en ce que**
les marques d'identification de carcasses sont appliquées à chaque carcasse par une seule tête d'impression (11) qui est supportée et déplacée par un bras de robot mécanique (8) qui déplace la tête d'impression dans trois axes mutuellement orthogonaux, et la tête d'impression est pourvue d'un capteur de proximité pour positionner avec précision la tête près de la carcasse dans chaque position d'impression qui est déterminée en fonction de la taille de la carcasse.

7. Appareil selon la revendication 6, dans lequel chaque marque d'identification de carcasse comprend un numéro de série unique.

8. Appareil selon la revendication 7, dans lequel le numéro de série est appliqué sous une forme lisible à l'oeil humain, qui peut également être lue en machine.

9. Appareil selon la revendication 6, dans lequel chaque marque d'identification de carcasse est appliquée sous une forme codée lue en machine.

10. Appareil selon la revendication 6, dans lequel la marque d'identification de carcasse est appliquée à la carcasse au moyen d'une encre indélébile.
